# EUROPEAN PATENT SPECIFICATION

(11) **EP 1 403 579 B1**
(45) Date of publication and mention of the grant of the patent: **11.01.2012**
(21) Application number: 03256080.7
(22) Date of filing: 26.09.2003
(51) Int. Cl.: F16M 11/28

(54) **Display apparatus**
Bildschirmvorrichtung
Dispositif de visualisation

(30) Priority: 27.09.2002 US 413776 P; 05.11.2002 KR 2002068264
(43) Date of publication of application: 31.03.2004
(73) Proprietor: SAMSUNG ELECTRONICS CO., LTD., Suwon-si, Gyeonggi-do 442-742 (KR)
(72) Inventor: Kim, Ju-hwan, Ingye Jugong Apt, Suwon-city Kyungki-do (KR); Byoun, Dae-hyoun, Seoul city (KR); Kim, Dong-hyug, Suwon-si Gyeonggi-do (KR)
(74) Representative: Walaski, Jan Filip

(56) References cited:
- EP-A- 1 085 753
- DE-U- 20 009 691
- GB-A- 2 277 439
- US-A- 3 905 311
- US-A- 4 616 218
- US-A- 5 549 264
- US-A- 5 904 328
- US-B1- 6 418 010
- P.K. TECH SYSTEM CO., LTD.: "Elevatoring apparatus for lcd monitor", , [Online] 24 June 2002 (2002-06-24), pages 1-14, internet Retrieved from the Internet: URL:http://patent2.kipris.or.kr/patent/XML /2020020007280/2020020007280.PDF> [retrieved on 2007-03-21] & KR 2000 279 427 Y (P.K. TECH SYSTEM CO., LTD) 24 June 2002 (2002-06-24)

## Description

The present invention relates to an apparatus for supporting a display, comprising a base part, an arm, a pair of slide members connected to the arm, a pair of corresponding parallel spaced guide rails upstanding from the base part to engage a respective slide member such that they slide thereon to move the arm up and down, and at least one spiral spring which counterbalances the arm and a display mountable to the arm and extends and contracts in response to a movement of the slide members with respect to the guide rails.

KR-U-20-279427 discloses a display apparatus including a monitor body, a base, a stand rising from the base, a plate fixed on a bracket at the rear of the monitor body and extending downwards, a guide plate fixed on the stand and having a pair of rail grooves and a slider having a projection that can be inserted into the rail grooves of the guide plate and moved up and down along the guide plate. The display apparatus also includes a pusher fixed to a lower part of the slider and provided with a semi-circular seating hole in its bottom. The display apparatus includes a spiral spring having a first end fixed to the stand and a second end displaced in the seating hole of the pusher to elastically support the monitor body in a direction opposite to the weight of the monitor body. Display apparatus for supporting a display are also known from GB 2277439A, US 4616218A and US 5549264A.

In the conventional display apparatus with the above configuration, since friction is generated when the slider is moved along the guide plate, the slider connected to the monitor body does not move smoothly along the guide plate when a user wishes to move the monitor body downwards. Therefore, the user may experience problems in adjusting the position of the monitor body.

In addition, friction is generated between a mounting place of the spiral spring and the spiral spring, and accordingly, the monitor body is not smoothly moved because of the spiral spring.

Accordingly, it is an aspect of the present invention to provide an apparatus having an improved structure of conveniently adjusting a position of a monitor body.

An apparatus for supporting a display is characterised by a spring anchor block provided between the slide members and a guide bracket coupled to the guide rails, wherein the at least one spiral spring has a first end coupled to the guide bracket and a second end coupled to the spring anchor block.

Advantageously, the at least one spiral spring comprises a wound part having a spiral shape and coupled to the guide bracket, and a coupling part extended from the wound part and coupled to the spring anchor block.

A pair of spiral springs may be coupled on opposing sides of the guide bracket.

Conveniently, a pair of accommodating parts to each accommodate a spiral spring may be provided on an opposing inner face of the guide bracket.

Preferably, a supporting unit is provided in each of the pair of accommodating parts to control extension and contraction of the respective spiral spring, the supporting unit including a rotational shaft installed transversely on each accommodating part and a spring guide rotatably installed on each rotational shaft on which the wound part of the respective spring is wound.

A ball bearing unit may be provided between each guide rail and slide member.

The ball bearing unit may comprise a supporting pin disposed between each guide rail and slide member and positioned along a lengthwise direction of the guide rail and a rolling ball rotatably installed on the supporting pin between said guide rail and slide member and contacted with the slide member by a rolling motion.

Advantageously, the arm further comprises a supporting bracket with a supporting part and an extended part extended downward from the supporting part and coupled to the paid of sliders by passing through the guide bracket.

Preferably, the guide bracket is displaced between the guide rail and the supporting bracket.

A stand supporting part may be installed on the base part to provide an accommodating space for the pair of guide rails.

Each slide member may smoothly move along the respective guide rail as external wall faces of both sides of the slide member are contacted by the rolling motion with the rolling ball within the guide rail.

In one embodiment, the slide member is drawn out from the guide rail to a predetermined length by an upward movement along the guide rail.

Preferably, the spring anchor block coupled to the pair of slide members performs a sliding motion along with a movement of the slide members.

The pair of spiral springs may be made of stainless steel with a thickness of 0.2mm to 0.35mm.

Conveniently, the wound part of the pair of spiral springs is unwound along circumferences of the respective spring guide by a rotation of the respective rotational shaft when the slide members and the spring anchor block move downward.

Preferably, the wound part of the pair of spiral springs is wound along the circumferences of the respective spring guide by the rotation of the respective rotational shaft when the slide members and the spring anchor block move upward.

An embodiment of the present invention will now be described, by way of example, with reference to the accompanying drawings, in which:
Figure 1 is a rear perspective view of a display apparatus support, according to the present invention, in its extended configuration;
Figure 2 is an exploded perspective view of most of the support shown in Figure 1;
Figure 3 is a rear perspective view of the display apparatus support, shown in Figure 1, in its retracted state;
Figure 4 is a front view of display apparatus support, shown in Figure 1, in its retracted state; and
Figure 5 is a sectional view of the display apparatus support taken along V-V in Figure 3.

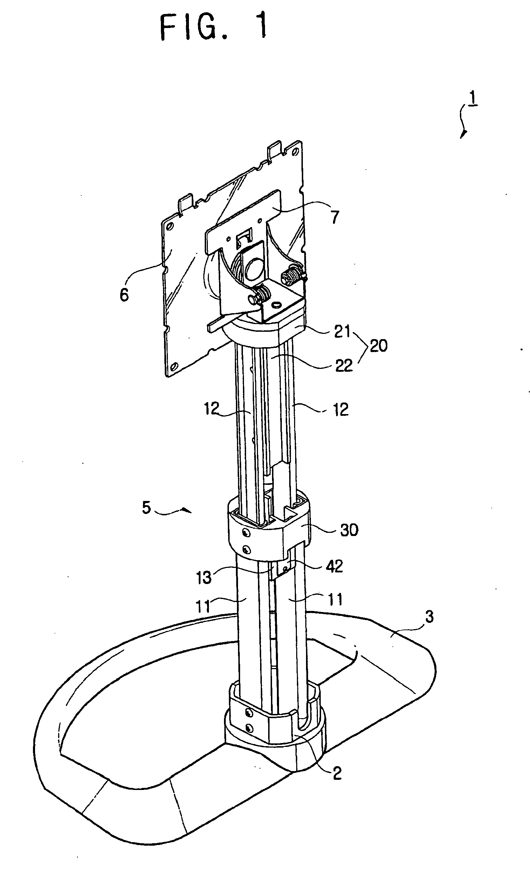

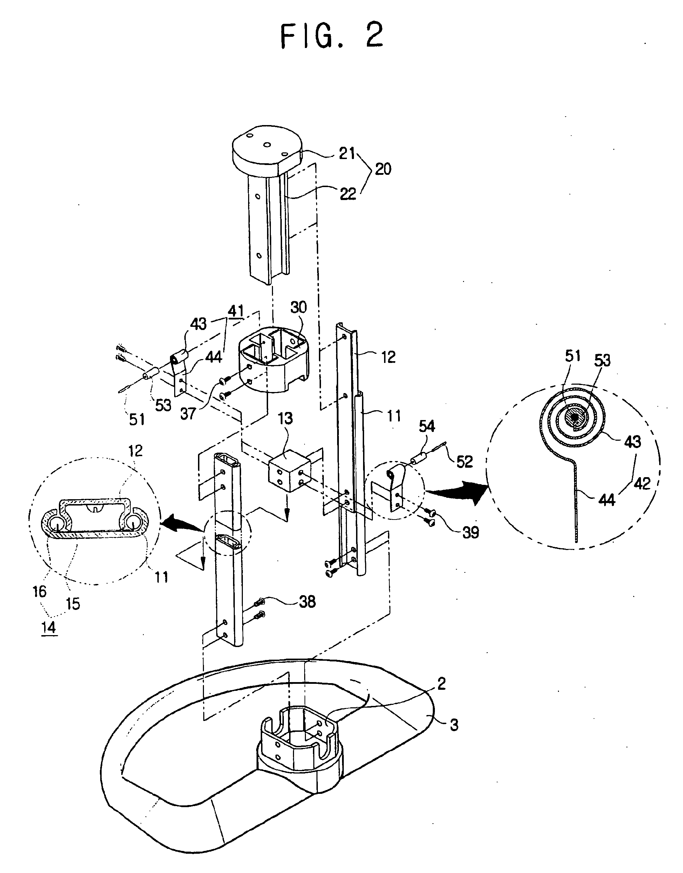

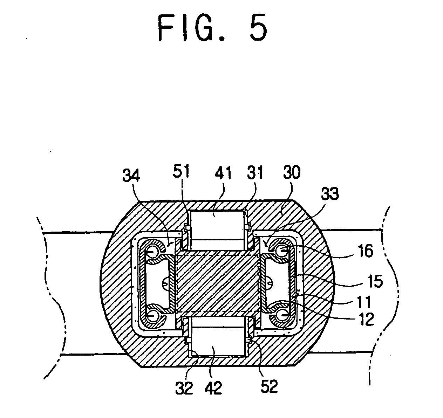

Referring to Figures 1 to 5, a display apparatus 1 according to the present invention includes a screen unit (not shown) including a screen on which images are displayed, a foot 3 to rest on a supporting surface (e.g. a table top), a leg 5 projecting upwards from the foot 3, and a connection assembly 7 for connecting the leg 5 to a screen bracket 6, which is fixed to the back of the screen unit.

The connection assembly 7 is mounted to the top of an arm 20. The arm 20 has a cap 21 which supports the connection assembly 7 and a rod 22 extending downwards from the cap 21.

The leg 5 comprises a pair of guide assemblies arranged so that the rod 22 extends between them.

Each of the guide assemblies includes a guide rail 11. A respective slider 12 is arranged to slide back and forth along each guide rail 11. A guide bracket, such as a collar 30, is coupled across the tops of the guide rails 11. The rod 22 of the arm 20 extends through the collar 30 when the arm is retracted, as described in more detail below.

Each guide rail 11 is C-shaped in cross-section and receives the outwardly bent sides of the respective slider 12. A ball bearing unit 14 is provided between each guide rail 11 and the bent edges of the associated slider 12. The ball bearing unit 14 includes a support 15 displaced in the guide rail 11 along the lengthwise direction, and a rolling balls 16 coupled to the support 15 in a rotatable manner and in contact a slider 12 (to be described later).

The bottom of each of the guide rails 11 is coupled to a coupling part 2 by screws 38. The coupling part 2 is located on the top face of the foot 3 can defines a walled space. The top of each of the guide rails 11 is coupled to the collar 30. The guide rails 11 are parallel to each other.

The top of each slider 12 is coupled to the rod 22 and the bottom of each slider 12 is coupled to a spring anchor block 13 to be described later. The sliders 12 move smoothly along the guide rails 11 as a result of the presence of the rolling balls 16 within the guide rail 11. The sliders 12 may be drawn out from the guide rail 11 by an upward movement along the guide rail 11.

The rod 22 is positioned over a space between the sliders 12 and the spring anchor block 13 is located below the space.

The sliders 12 are coupled to opposite sides of the spring anchor block 13. First and second spiral springs 41, 42, described below, are respectively coupled to the front and rear faces of the spring anchor block 13 by screws 39. Thus, when the sliders 12 are slid along the guide rails 12, the spring anchor block 13 moves with the sliders 12. Since the first and second spiral springs 41, 42 are coupled to the spring anchor block 13, the first and second spiral springs 41, 42 are extended and contracted according to the movement of the spring anchor block 13 with the sliders 12.

The strengths of the first and second spiral springs 41, 42 is such that they counterbalance the weight of the screen unit. Preferably, the first and second spiral springs 41, 42 are formed of stainless steel with a thickness of 0.2mm to 0.35mm.

The first spiral spring 41 includes a wound part 43, attached to the collar 30, and a coupling part 44 extending from the wound part 43 and coupled to the spring anchor block 13. The second spiral spring 42 is similarly arranged.

A first accommodating part 31, on which the first spiral spring 41 is installed, is provided on an inner front face of the collar 30 and a second accommodating part 32, on which the second spiral spring 42 is installed, is provided on an inner rear face of the collar 30. Third and fourth accommodating parts 33, 34 to accommodate the pair of guide assemblies (i.e. the guide rails 11 and the sliders 12) are respectively provided on opposite sides of the collar 30.

The tops of the guide rails 11 are inserted into the third and fourth accommodating parts 33, 34 respectively and are fixed by screws 37.

A supporting unit is provided on each of the first and second accommodating parts 31, 32 allow extension and retraction. That is, to allow the first and second spiral springs 41, 42 to be unwound and wound.

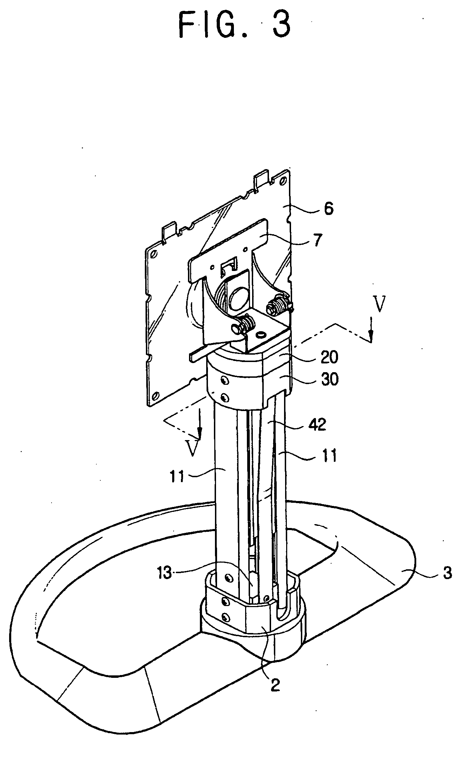

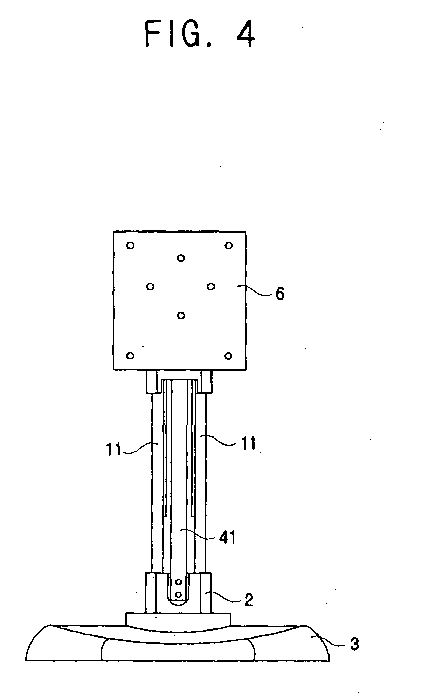

The supporting unit includes first and second transverse shafts 51, 52 on respectively the first and second accommodating parts 31, 32. First and second plastic spring guides 53, 54 are rotatably installed respectively on the first and second rotational shafts 51, 52, on which the first and second spring springs 41, 42 are wound. Since the coupling parts 44 of the first and second spiral springs 41, 42 are coupled to the spring anchor block 13, the wound parts 43 of the first and second spiral springs 41, 42 are unwound from the first and second spring guides 53, 54 by rotation of the first and second rotational shafts 51, 52 when the sliders 12 and the spring anchor block 13 move downward. That is, the first and second spiral springs 41, 42 are extended (see Figures 3 and 4) when the sliders 12 are retracted.

Conversely, the wound parts 43 of the first and second spiral springs 41, 42 are wound around the first and second spring guides 53, 54 by the rotation of the first and second rotational shafts 51, 52 when the sliders 12 and the spring anchor block 13 move upward. That is, the first and second spiral springs 41, 42 are contracted (see Figure 1).

Starting with the display apparatus extended as shown in Figure 1. If a user holds the screen unit (not shown) and moves it downward, the sliders 12 move downward along the guide rails 11, aided by the rolling balls 16. At this time, since the spring anchor block 13 is coupled to the sliders 12, the spring anchor block 13 moves downward with the sliders 12 extending the springs 41, 42.

The downward movement of the coupling parts 44 of the first and second spiral springs 41, 42 is possible because the spiral wound parts 43 of the first and second spiral springs 41, 42 can unwind in response to the downward movement of the coupling parts 44 of the first and second spiral springs 41, 42.

If the user suspends the downward movement of the screen unit when the screen unit has reached an intermediate position, the screen unit will not move downward any more. That is, since the weight of the screen unit is balanced by the forces in the first and second spiral springs 41, 42, the movement of the screen unit stops (see Figures 3 and 4).

Similarly, the user can raise the screen unit and it will stay at its new position because its weight is balanced by the springs 41, 42 (see Figure 1).

In a display apparatus 1 according to the present invention, the sliders 12 smoothly move along the guide rails 11 because of the ball bearing unit 14 and the position of the screen unit is easily adjustable.

In the above-described embodiment, the first and second spiral springs 41, 42 are provided. However, one spiral spring may be installed with the elasticity of the one spiral spring being set equal to the weight of the screen unit.

In the above-described embodiment, the number of spiral springs installed is two, that is, the first and second spiral springs 41, 42. However, four spiral springs may be installed in the display apparatus according to the present invention. It should be noted that the number of spiral springs which may be installed in the display apparatus according to the present invention is not limited to two or four, but may be determined optionally by display apparatus makers.

As described above, according to the present invention, there is provided a display apparatus having an improved structure of conveniently adjusting a position of the screen unit because the slider may be slid smoothly along the guide bracket.

Although a few embodiments of the present invention have been shown and described, it will be appreciated by those skilled in the art that changes may be made in these embodiments.

## Claims

1. An apparatus for supporting a display, comprising a base part (3), an arm (20), a pair of slide members (12) connected to the arm (20), a pair of corresponding parallel spaced guide rails (11) upstanding from the base part (3) to engage a respective slide member (12) such that they slide thereon to move the arm (20) up and down and at least one spiral spring (41,42) which counterbalances the arm (20) and a display mountable to the arm (20) and extends and contracts in response to a movement of the slide members (12) with respect to the guide rails (11)
**characterised by** a spring anchor block (13) provided between the slide members (12) and a guide bracket (30) coupled to the guide rails (11), wherein the at least one spiral spring (41,42) has a first end (43) coupled to the guide bracket (30) and a second end (44) coupled to the spring anchor block (13).

2. An apparatus according to claim 1, wherein the at least one spiral spring (41,42) comprises a wound part (43) having a spiral shape and coupled to the guide bracket (30) and a coupling part (44) extended from the wound part (43) and coupled to the spring anchor block (13).

3. An apparatus according to any preceding claim comprising a pair of spiral springs (41,42) coupled on opposing sides of the guide bracket (30).

4. An apparatus according to claim 3, further comprising a pair of accommodating parts (31,32) to each accommodate a spiral spring (41,42) provided on an opposing inner face of the guide bracket (30).

5. An apparatus according to claim 4, further comprising a supporting unit provided in each of the pair of accommodating parts (31,32) to control extension and contraction of the respective spiral spring (41,42), the supporting unit including a rotational shaft (51,52) installed transversely on each accommodating part (31,32) and a spring guide (53,54) rotatably installed on each rotational shaft (51,52) on which the wound part (43) of the respective spring (41,42) is wound.

6. An apparatus according to any preceding claim, further comprising a ball bearing unit (14) provided between each guide rail (11) and slide member (12).

7. An apparatus according to claim 6, wherein the ball bearing unit (14) comprises a supporting pin (15) disposed between each guide rail (11) and slide member (12) and positioned along a lengthwise direction of the guide rail (11) and a rolling ball (16) rotatably installed on the supporting pin (15) between said guide rail (11) and slide member (12) and contacted with the slide member (12) by a rolling motion.

8. An apparatus according to claim 7, the arm (20) further comprising a supporting bracket with a supporting part (21) and an extended part (22) extended downward from the support part (21) and coupled to the pair of sliders (12) by passing through the guide bracket (30).

9. An apparatus according to claim 8, wherein the guide bracket (30) is displaced between the guide rail (12) and the supporting bracket (21,22).

10. An apparatus according to any preceding claim, further comprising a stand supporting part (2) installed on the base part (3) to provide an accommodating space for the pair of guide rails (11).

11. An apparatus according to claims 7 or 8, wherein each slide member (12) smoothly moves along the respective guide rail (11) as external wall faces of both sides of the slide member (12) are contacted by the rolling motion with the rolling ball (16) within the guide rail (11).

12. An apparatus according to any preceding claim, wherein the slide member (12) is drawn out from the guide rail (11) to a predetermined length by an upward movement along the guide rail (11).

13. An apparatus according to claim 1, wherein the spring anchor block (13) coupled to the pair of slide members (12) performs a sliding motion along with a movement of the slide members (12).

14. An apparatus according to any preceding claim, wherein the pair of spiral springs (41,42) are made of stainless steel with a thickness of 0.2mm to 0.35mm.

15. An apparatus according to claim 5, wherein the wound part (43) of the pair of spiral springs (41,42) is unwound along circumferences of the respective spring guide (53,54) by a rotation of the respective rotational shaft (51,52) when the slide members (12) and the spring anchor block (13) move downward.

16. An apparatus according to claim 5, wherein the wound part (43) of the pair of spiral springs (41,42) is wound along the circumferences of the respective spring guide (53,54) by the rotation of the respective rotational shaft (51,52) when the slide members (12) and the spring anchor block (13) move upward.

## Patentansprüche

1. Vorrichtung zum Stützen eines Bildschirms, die ein Fußteil (3), einen Arm (20), ein Paar von Gleitelementen (12), die mit dem Arm (20) verbunden sind, ein Paar von entsprechenden parallel beabstandeten Gleitschienen (11), die aus dem Fußteil (3) aufrecht stehen, um ein jeweiliges Gleitelement (12) derart in Eingriff zu bringen, dass sie darauf gleiten, um den Arm (20) auf und ab zu bewegen und zumindest eine Spiralfeder (41, 42) umfasst, die den Arm (20) und einen an den Arm (20) montierbaren Bildschirm ausgleicht und sich, als Reaktion auf eine Bewegung der Gleitelemente (12) in Bezug auf die Gleitschienen (11), ausdehnt und verkürzt, **gekennzeichnet durch** einen Federankerblock (13), der zwischen den Gleitelementen (12) und einem Führungsträger (30) bereitgestellt ist, der an die Gleitschienen (11) gekoppelt ist, wobei die zumindest eine Spiralfeder (41, 42) ein erstes Ende (43), das an den Führungsträger (30) gekoppelt ist und ein zweites Ende (44) aufweist, das an den Federankerblock (13) gekoppelt ist.

2. Vorrichtung nach Anspruch 1, wobei zumindest eine Spiralfeder (41, 42) einen aufgerollten Teil (43) umfasst, der eine Spiralform aufweist und an den Führungsträger (30) gekoppelt ist und ein Kopplungsteil (44) aufweist, das sich aus dem aufgerollten Teil (43) erstreckt und an den Federankerblock (13) gekoppelt ist.

3. Vorrichtung nach einem beliebigen vorhergehenden Anspruch, die ein Paar von Spiralfedern (41, 42) umfasst, die an entgegengesetzte Seiten des Führungsträgers (30) gekoppelt sind.

4. Vorrichtung nach Anspruch 3, die weiter ein Paar von Aufnahmeteilen (31, 32) umfasst, um jeweils eine Spiralfeder (41, 42) aufzunehmen, die auf einer entgegengesetzten Innenfläche des Führungsträgers (30) bereitgestellt ist.

5. Vorrichtung nach Anspruch 4, die weiter eine Stützeinheit umfasst, die in jedem Paar von Aufnahmeteilen (31, 32) bereitgestellt ist, um Dehnung und Zusammenziehung der jeweiligen Spiralfeder (41, 42) zu steuern, wobei die Stützeinheit eine Drehwelle (51, 52), die an jedem Aufnahmeteil (31, 32) quer eingebaut ist und eine Federführung (53, 54) einschließt, die an jeder Drehwelle (51, 52) drehbar eingebaut ist, auf welcher der aufgerollte Teil (43) der jeweiligen Feder (41, 42) aufgerollt ist.

6. Vorrichtung nach einem beliebigen vorhergehenden Anspruch, die weiter eine Kugellagereinheit (14) umfasst, die zwischen jeder Führungsschiene (11) und Gleitelement (12) bereitgestellt ist.

7. Vorrichtung nach Anspruch 6, wobei die Kugellagereinheit (14) einen tragenden Stift (15) umfasst, der zwischen jeder Führungsschiene (11) und dem Gleitelement (12) angeordnet ist und entlang einer Längsrichtung der Führungsschiene (11) positioniert ist und eine rollende Kugel (16) drehbar auf dem tragenden Stift (15) zwischen besagter Führungsschiene (11) und dem Gleitelement (12) eingebaut ist und durch eine Rollbewegung Kontakt mit dem Gleitelement (12) hat.

8. Vorrichtung nach Anspruch 7, wobei der Arm (20) weiter einen Stützträger mit einem stützenden Teil (21) und einem verlängerten Teil (22) umfasst, der sich abwärts aus dem Stützträger (21) erstreckt und an das Paar von Gleitelementen (12) gekoppelt ist, indem er den Führungsträger (30) durchläuft.

9. Vorrichtung nach Anspruch 8, wobei der Führungsträger (30) zwischen der Führungsschiene (11) und dem Stützträger (21, 22) verlagert wird.

10. Vorrichtung nach einem beliebigen vorhergehenden Anspruch, die weiter ein Ständerstützteil (2) umfasst, das auf dem Fußteil (3) installiert ist, um einen Aufnahmeraum für das Gleitschienenpaar (11) bereitzustellen.

11. Vorrichtung nach Ansprüchen 7 oder 8, wobei sich jedes Gleitelement (12) reibungslos entlang der jeweiligen Führungsschiene (11) bewegt, sowie externe Wandflächen beider Seiten des Gleitelements (12) durch die Rollbewegung mit der rollenden Kugel (16) innerhalb der Führungsschiene (11) kontaktiert werden.

12. Vorrichtung nach einem beliebigen vorhergehenden Anspruch, wobei das Gleitelement (12) durch eine Aufwärtsbewegung entlang der Führungsschiene (11) auf eine vorbestimmte Länge aus der Führungsschiene (11) herausgezogen wird.

13. Vorrichtung nach Anspruch 1, wobei der an das Paar von Gleitelementen (12) gekoppelte Federankerblock (13) eine Gleitbewegung zusammen mit einer Bewegung der Gleitelemente (12) ausführt.

14. Vorrichtung nach einem beliebigen vorhergehenden Anspruch, wobei das Paar von Spiralfedern (41, 42) aus Edelstahl mit einer Dicke von 0,2 mm bis 0,35 mm hergestellt ist.

15. Vorrichtung nach Anspruch 5, wobei der aufgerollte Teil (43) des Paars von Spiralfedern (41, 42) entlang Umfängen der jeweiligen Federführung (53, 54) durch eine Drehung der jeweiligen Drehwelle (51, 52) abgerollt wird, wenn sich die Gleitelemente (12) und der Federankerblock (13) abwärts bewegen.

16. Vorrichtung nach Anspruch 5, wobei der aufgrollte Teil (43) des Paars von Spiralfedern (41, 42) entlang den Umfängen der jeweiligen Federführung (53, 54) durch eine Drehung der jeweiligen Drehwelle (51, 52) aufgerollt wird, wenn sich die Gleitelemente (12) und der Federankerblock (13) aufwärts bewegen.

## Revendications

1. Appareil pour supporter un affichage, comprenant une partie base (3), un bras (20), une paire d'éléments coulisseaux (12) rattachés au bras (20), une paire de rails de guidage écartés parallèles correspondants (11) s'élevant verticalement depuis la partie base (3) pour s'engager avec un élément coulisseau respectif (12) de manière à ce qu'ils coulissent sur ceux-ci pour déplacer le bras (20) vers le haut et vers le bas et au moins un ressort spiral (41, 42) qui contrebalance le bras (20) et un affichage montable sur le bras (20) et qui se déploie et se contracte en réponse à un mouvement des éléments coulisseaux (12) par rapport aux rails de guidage (11)
**caractérisé par** un bloc d'ancrage de ressort (13) prévu entre les éléments coulisseaux (12) et un bloc de guidage (30) accouplé aux rails de guidage (11), dans lequel au moins un ressort spiral (41, 42) a une première extrémité (43) accouplée au bloc de guidage (30) et une deuxième extrémité (44) accouplée au bloc d'ancrage de ressort (13).

2. Appareil selon la revendication 1, dans lequel l'au moins un ressort spiral (41, 42) comprend une partie enroulée (43) ayant une forme en spirale et accouplée au bloc de guidage (30) et une partie d'accouplement (44) qui s'étend depuis la partie enroulée (43) et qui est accouplée au bloc d'ancrage de ressort (13).

3. Appareil selon l'une quelconque des revendications précédentes, comprenant une paire de ressorts spiraux (41, 42) accouplés sur des côtés opposés du bloc de guidage (30).

4. Appareil selon la revendication 3, comprenant en outre une paire de parties de logement (31, 32) pour loger chacune un ressort spiral (41, 42), prévues sur une face interne opposée du bloc de guidage (30).

5. Appareil selon la revendication 4, comprenant en outre une unité de support prévue dans chacune de la paire de parties de logement (31, 32) pour contrôler le déploiement et la contraction du ressort spiral respectif (41, 42), cette unité de support comprenant un axe de rotation (51, 52) installé transversalement sur chaque partie de logement (31, 32) et un guide de ressort (53, 54) installé de manière rotative sur chaque axe de rotation (51, 52) sur lequel la partie enroulée (43) du ressort respectif (41, 42) est enroulée.

6. Appareil selon l'une quelconque des revendications précédentes, comprenant en outre une unité roulement à billes (14) prévue entre chaque rail de guidage (11) et chaque élément coulisseau (12).

7. Appareil selon la revendication 6, dans lequel l'unité roulement à billes (14) comprend une goupille de support (15) disposée entre chaque rail de guidage (11) et chaque élément coulisseau (12) et positionnée le long d'une direction longitudinale du rail de guidage (11) et une bille roulante (16) installée de manière rotative sur la goupille de support (15) entre ledit rail de guidage (11) et ledit élément coulisseau (12) et mise en contact avec l'élément coulisseau (12) par un mouvement de roulement.

8. Appareil selon la revendication 7, le bras (20) comprenant en outre un élément de support avec une partie de support (21) et une partie allongée (22) s'étendant vers le bas depuis la partie de support (21) et accouplée à la paire de coulisseaux (12) en passant à travers le bloc de guidage (30).

9. Appareil selon la revendication 8, dans lequel le bloc de guidage (30) est déplacé entre le rail de guidage (11) et l'élément de support (21, 22).

10. Appareil selon l'une quelconque des revendications précédentes, comprenant en outre une partie de support de pied (2) installée sur la partie base (3) pour fournir un espace de logement pour la paire de rails de guidage (11).

11. Appareil selon les revendications 7 ou 8, dans lequel chaque élément coulisseau (12) se déplace sans à-coups le long du rail de guidage respectif (11) tandis que les faces des parois externes des deux côtés de l'élément coulisseau (12) entrent en contact avec la bille roulante (16) grâce au mouvement de roulement à l'intérieur du rail de guidage (11).

12. Appareil selon l'une quelconque des revendications précédentes, dans lequel l'élément coulisseau (12) est tiré hors du rail de guidage (11) jusqu'à une longueur prédéterminée par un mouvement vers le haut le long du rail de guidage (11).

13. Appareil selon la revendication 1, dans lequel le bloc d'ancrage de ressort (13) accouplé à la paire d'éléments coulisseaux (12) effectue un mouvement de coulissement avec un déplacement des éléments coulisseaux (12).

14. Appareil selon l'une quelconque des revendications précédentes, dans lequel la paire de ressorts spiraux (41, 42) sont faits en acier inoxydable avec une épaisseur de 0,2 mm à 0,35 mm.

15. Appareil selon la revendication 5, dans lequel la partie enroulée (43) de la paire de ressorts spiraux (41, 42) est déroulée le long des circonférences du guide de ressort respectif (53, 54) par une rotation de l'axe de rotation respectif (51, 52) lorsque les éléments coulisseaux (12) et le bloc d'ancrage de ressorts (13) se déplacent vers le bas.

16. Appareil selon la revendication 5, dans lequel la partie enroulée (43) de la paire de ressorts spiraux (41, 42) est enroulée le long des circonférences du guide de ressort respectif (53, 54) par la rotation de l'axe de rotation respectif (51, 52) lorsque les éléments coulisseaux (12) et le bloc d'ancrage de ressorts (13) se déplacent vers le haut.
